# EUROPEAN PATENT APPLICATION

(11) **EP 3 893 016 A1**
(43) Date of publication of application: **13.10.2021**
(21) Application number: 20169069.0
(22) Date of filing: 09.04.2020
(51) Int. Cl.: G01S 5/02, H04W 64/00, H04W 4/02

(54) **CONCEPT OF DEPLOYING WIRELESS ACCESS POINTS FOR RTT BASED POSITIONING**

(71) Applicant: HERE Global B.V., 5611 ZT Eindhoven (NL)
(72) Inventor: Wirola, Lauri, 33100 Tampere (FI); Rauhala, Petri, 33710 Tampere (FI); Luomi, Marko, 33880 Lempäälä (FI)
(74) Representative: Cohausz & Florack

(57) **Abstract**

It is inter-alia disclosed a method performed by at least one first apparatus said method comprising obtaining or causing obtaining first information representative of a distance between a mobile device and at least one of at least two first wireless access points; obtaining or causing obtaining second information representative of a distance between the mobile device and at least one second wireless access point; and associating or causing associating the second information with a position estimate of the mobile device determined based on the at least one distance between the mobile device and the at least one of at least two first wireless access points.

## Description

### FIELD OF THE DISCLOSURE

The present disclosure generally relates to the field of positioning technologies, more specifically to the field of indoor positioning.

### BACKGROUND

Indoor positioning technologies may include indoor positioning solutions based on use of pseudolites, i.e. GPS-like short-range beacons, solutions based on ultra-sound positioning, solutions based on Bluetooth (e.g. Bluetooth Low Energy, BTLE), Wireless Local Area Network (WLAN) or cellular signals. Thereby, solutions based on the latter Bluetooth, WLAN and cellular signals may be considered advantageous in that corresponding technology is supported by existing mobile devices and that corresponding infrastructure already exists in many places.

Wi-Fi Round Trip Time (RTT) has been introduced into the IEEE 802.11 specification as parameter to be employed for estimating a distance e.g. between a mobile device and a Wi-Fi Access point (AP). Based thereon, if a location of three Wi-Fi APs is known, a location of a mobile device can be determined based on RTT parameters received by the mobile device from the respective Wi-Fi APs and corresponding distances derived therefrom using e.g. trilateration methods. Thus, RTT parameter based positioning technology is a further technology suitable in particular for indoor positioning and is in particular beneficial as it does not depend on signal strengths.

However, in practice, RTT based positioning is often not available as the corresponding technology is often not supported by Wi-Fi APs deployed within an area of interest, e.g. a shopping mall or the like. At the same time, cases may exist in which Wi-Fi APs supporting the corresponding technology are already deployed within such area of interest, however, in which cases positions of such Wi-Fi APs are not known to a positioning system. For example, an older Wi-Fi AP not supporting the corresponding technology may have been replaced by a new Wi-Fi AP supporting the corresponding technology (among other advantages which may be a reason for the replacement), but may not have been registered in a corresponding positioning system. A reason therefor may be that such registering currently corresponds to a laborious task of manually capturing and storing corresponding AP information and position in the positioning system. This laborious task may also hamper testing of multiple positions of a Wi-Fi AP to be used for a positioning system for position optimization of the Wi-Fi AP.

In particular given the advantages offered by RTT based technology for positioning systems, in particular for indoor positioning systems, a solution is thus desirable that enables a fast and simplified way of registering positions of wireless access points to be used for RTT based positioning in a corresponding positioning system.

### SUMMARY OF SOME EMBODIMENTS OF THE PRESENT DISCLOSURE

It is inter-alia an object addressed by the present disclosure to provide methods and apparatuses that facilitate deployment of new wireless access points for positioning systems, in particular for indoor positioning, in particular new wireless access points supporting RTT based positioning.

According to a first exemplary aspect of the present disclosure, a method performed by at least one first apparatus is disclosed, said method comprising:
- obtaining or causing obtaining first information representative of a distance between a mobile device and at least one of at least two first wireless access points;
- obtaining or causing obtaining second information representative of a distance between the mobile device and at least one second wireless access point; and
- associating or causing associating the second information with a position estimate of the mobile device determined based on the at least one distance between the mobile device and the at least one of at least two first wireless access points.

According to a second exemplary aspect of the present disclosure, a method performed by at least one second apparatus is disclosed, said method comprising:
- obtaining or causing obtaining first information representative of a distance between the at least one second apparatus and at least one of at least two first wireless access points;
- obtaining or causing obtaining second information representative of a distance between the at least one second apparatus and at least one second wireless access point; and
- providing or causing providing the second information in association with the obtained first information and/or a position estimate obtained based on the first information as first information to be accessible by an external apparatus.

For each of the methods according to the first and second aspects of the present disclosure, an apparatus is furthermore disclosed (and subsequently referred to as apparatus according to the first or second aspect of the present disclosure) that is configured to perform and/or control the respective method or comprises respective means for performing and/or controlling the steps of the respective method. In this case, it is possible either for all the steps of the respective method to be controlled, or for all the steps of the respective method to be performed, or for one or more steps to be controlled and one or more steps to be performed. One or more of the means can also be performed and/or controlled by the same unit. By way of example, one or more of the means may be formed by one or more processors.

For each of the methods according to the first and second aspects of the present disclosure, an apparatus (e.g. the at least one first apparatus according to the first aspect or the at least one second apparatus according to the second aspect) is furthermore disclosed (and subsequently referred to as the at least one first apparatus according to the first aspect or the at least one second apparatus according to the second aspect of the present disclosure) that comprises at least one processor and at least one memory that contains program code, wherein the memory and the program code are configured to use the at least one processor to cause an apparatus (for example the apparatus having the processor and the memory) to perform and/or control at least the respective method. In this case, it is possible either for all the steps of the respective method to be controlled, or for all the steps of the respective method to be performed, or for one or more steps to be controlled and one or more steps to be performed.

The at least one first apparatus according to the first aspect of the present disclosure may correspond to or comprise or be comprised by at least one network entity such as at least one server (e.g. a server cloud). The at least one first apparatus according to the first aspect of the present disclosure may e.g. be integrated in the back end of a positioning service providing company, for example. The at least one second apparatus according to the second aspect of the present disclosure may correspond to at least one mobile device, for example, such as e.g. an Internet-of-Things (IoT) device, a smartphone, a tablet computer, a notebook computer, a smart watch, or a smart band.

For each of the methods according to the first and second aspects of the present disclosure, a system is furthermore disclosed (and subsequently referred to a system according to the first or second aspect of the present disclosure) that comprises at least one apparatus (e.g. the at least one first apparatus according to the first aspect and/or the at least one second apparatus according to the second aspect) that is configured to perform and/or control the respective method or has means for performing and/or controlling the steps of the respective method. In this case, it is possible either for all the steps of the respective method to be controlled, or for all the steps of the respective method to be performed, or for one or more steps to be controlled and one or more steps to be performed.

Further, a system is disclosed that comprises at least one first apparatus according to the first aspect of the present disclosure and at least one second apparatus according to the second aspect of the present disclosure.

In other words, a system is disclosed that may comprise:
at least one second apparatus configured for:
   - obtaining or causing obtaining first information representative of a distance between the at least one second apparatus and at least one of at least two first wireless access points;
   - obtaining or causing obtaining second information representative of a distance between the at least one second apparatus and at least one second wireless access point; and
   - providing or causing providing the second information in association with the obtained first information and/or a position estimate obtained based on the first information as first information to be accessible by at least one first apparatus.
and
the at least one first apparatus configured for:
   - obtaining or causing obtaining the first information representative of the distance between the at least one second apparatus and the at least one of at least two first wireless access points;
   - obtaining or causing obtaining second information representative of a distance between the at least one second apparatus and the at least one second wireless access point; and
   - associating or causing associating the second information with a position estimate of the at least one second apparatus determined based on the at least one distance between the at least one second apparatus and the at least one of at least two first wireless access points.

For each of the methods according to the first and second aspects of the present disclosure, a computer program is furthermore disclosed (and subsequently referred to as computer program according to the first, or second aspect of the present disclosure) that comprises program instructions that cause a processor to perform and/or control the respective method when the computer program runs on the processor. In this specification, a processor is intended to be understood to mean control units, microprocessors, micro control units such as microcontrollers, digital signal processors (DSP), application-specific integrated circuits (ASICs) or field programmable gate arrays (FPGAs), inter alia.

In this case, it is possible either for all the steps of the respective method to be controlled, or for all the steps of the respective method to be performed, or for one or more steps to be controlled and one or more steps to be performed. By way of example, the computer program may be distributable via a network such as the internet, a telephone or mobile radio network and/or a local area network, for example. The computer program may at least in part be software and/or firmware of a processor. It may equally be implemented at least in part as hardware. By way of example, the computer program may be stored on a computer-readable storage medium, e.g. a magnetic, electric, electromagnetic, optical and/or other kind of storage medium. By way of example, the storage medium may be part of the processor, for example a (nonvolatile or volatile) program memory of the processor or a part thereof. By way of example, the storage medium is substantive, that is to say tangible, and/or non-transitory.

Exemplary embodiments of all aspects of the present disclosure may have one or more (or for instance all) of the properties described below.

In an exemplary embodiment, the method according to the first aspect is in particular suitable for enabling a positioning system, in particular an indoor positioning system, to obtain position information of one or more newly employed access points to be used as access points for the positioning system. Thereby, in an exemplary embodiment, a positioning system comprises a network of wireless access points configured for obtaining a position estimate of an entity to be positioned. Such entity may correspond to a mobile device, e.g. a smartphone, of a person. Such entity may further correspond to said newly employed access point to be used as part of the positioning system after its position has been obtained by the positioning system. It is noted that when referring to "positioning system" herein, it is referred to said network of devices and/or to the implementation of the positioning system on one or more of these devices which enables performing any one or more steps of the methods according to the first and/or the second aspect and/or which enables performing positioning calculations of devices to be positioned by the positioning system. For example, the positioning system may in addition to wireless access points comprise a server comprising or connected with a database storing information usable by the positioning system. Such server may in an exemplary embodiment correspond to or comprise the at least one first apparatus configured to perform steps of the method according to the first aspect and may be configured for determining a position estimate of the mobile device based on first information obtained at the mobile device from one or more first wireless access points and transmitted to the server. Alternatively or in addition, the mobile device may determine a position estimate based on information representative of a distance between the mobile device and the at least one of at least two first wireless access points and may transmit the position estimate of the mobile device as an alternative example of first information to the server to perform further steps of the method according to the first aspect. Thus, in at least both of these cases, in an exemplary embodiment, the method according to the first aspect comprises
- determining or causing determining a position estimate of the mobile device based at least in part on the obtained first information.

It is noted that herein, a first wireless access point is a wireless access point suitable for determining a position estimate of the mobile device, e.g. a position of the first wireless access point may be registered in and thus available to the positioning system, and/or a confidence level of the position of the first wireless access point may be above a predefined threshold value. Thus, the position estimate of the mobile device may in particular be determined in relation to the first wireless access points. More specifically, in an exemplary embodiment, one or all of the at least two first wireless access points respectively correspond to or comprise wireless access points configured for supporting Round-Trip-Time (RTT) measurements as defined in the IEEE 802.11-2016 standard (and later versions thereof).

Further, in an exemplary embodiment, the at least two first wireless access points comprise at least one of a mobile device (exemplarily referred to as RTT responder further herein) and a permanently installed wireless access point.

Thus, while in an exemplary embodiment, at least one of the at least two first wireless access points may correspond to or comprise a permanently installed wireless access point (e.g. a fixedly installed router or base station), in an exemplary embodiment, at least one of the at least two first wireless access points corresponds to or comprises a mobile device configured for supporting Round-Trip-Time (RTT) measurements as defined in the IEEE 802.11-2016 standard (and/or later versions thereof). Such mobile device is referred to as Round-Trip-Time (RTT) responder herein. Thus, in an exemplary embodiment, a Round-Trip-Time (RTT) responder corresponds to or comprises a mobile device configured for supporting Round-Trip-Time (RTT) measurements as defined in the IEEE 802.11-2016 standard (and/or later versions thereof). It is noted that, in an exemplary embodiment, a mobile device corresponds to or comprises a smartphone, an Internet-of-Things (IoT) device, a smart home device, a tablet computer, a notebook computer, a smart watch, and/or a smart band. As will be explained in more detail below, use of RTT responders is in particular of advantage as RTT responders can be easily and flexibly installed within an area of interest as a seed for enabling a positioning system to learn locations of wireless access points (e.g. permanently installed wireless access points), a respective position of which is (yet) unknown to the positioning system.

Further, a second wireless access point is a wireless access point of (yet) unknown position, the position of which is to be determined, e.g. at least in part by employing the method according to the first aspect. It is noted that determining a position estimate of the mobile device may further rely on identification information of the at least two first wireless access points which enables determining a respective position of each of the at least two first wireless access points. In other words, in an exemplary embodiment, the method according to the first aspect further comprises obtaining or causing obtaining identification information of the at least one of at least two first wireless access points and determining or causing determining a position estimate of the mobile device based at least in part on the obtained first information and based on the obtained identification information. Instead or in addition to the identification information, a location (position information) of the at least one of the at least two first wireless access points may be obtained.

Thus, in an exemplary embodiment, the at least two first wireless access points are comprised by a network of access points of a positioning system unaware of a position of the at least one second wireless access point before the second information representative of the distance between the mobile device and the at least one second wireless access point is obtained and/or before a position estimate of the at least one second wireless access point is determined.

Wireless access points of such positioning system (e.g. at least one of the at least two first wireless access points) may in particular include Wireless Local Area Network (WLAN) and/or Bluetooth wireless access points that are configured to connect for example to a mobile device to enable connection of the mobile device with a network such as the Internet. As mentioned above, such wireless access points (e.g. at least one of the at least two first wireless access points) may include in particular permanently installed wireless access points, i.e. wireless access points that are permanently and/or fixedly installed in a given location and are not intended to be moved. Thus, in an exemplary embodiment, a permanently installed access point is an access point permanently and/or fixedly installed at a given location not intended to be moved.

As further mentioned above, in addition, wireless access points (e.g. at least one of the at least two first wireless access points) may include non-permanently installed access points, for example an access point removably installed at a given location. As mentioned above, in an exemplary embodiment, such non-permanently installed access point corresponds to or comprises a mobile device, e.g. a smartphone, configured for performing operations of a wireless access point. Thereby, being configured for performing operations of a wireless access point is to be understood as being configured for connecting with an external device, e.g. a further mobile device, to enable connection of the external device to a network, in particular to the Internet. Such non-permanently installed access points are of particular advantage as they can be placed easily at in the vicinity of interesting locations, e.g. within a target premise, for example using temporary stands, by being placed on a shelve, on top of a cabinet, and/or by being temporarily and removably attached to a wall, e.g. using adhesive tape. Thus, in an exemplary embodiment, a non-permanently installed access point corresponds to or comprises one or more of:
- a device removably installed at a location and configured for performing operations of a wireless access point;
- a battery operated device configured for performing operations of a wireless access point;
- a mobile device configured for performing operations of a wireless access point.

Thus, in the context of the present disclosure, in an exemplary embodiment, a wireless access point (e.g. at least one of the at least two first wireless access points and/or the at least one second wireless access point) corresponds to or comprises at least one of:
- a permanently installed access point configured to wirelessly connect with an external device using a networking technology based on the IEEE 802.11 family of standards and to enable connection of the external device to a wired and/or wireless network, in particular the internet, via the access point;
- a permanently installed access point configured to wirelessly connect with an external device using a networking technology based on the Bluetooth standard and to enable connection of the external device to a wired and/or wireless network, in particular the internet, via the access point;
- a non-permanently installed access point configured to wirelessly connect with an external device using a networking technology based on the IEEE 802.11 family of standards and to enable connection of the external device to a wired and/or wireless network, in particular the internet, via the access point;
- a non-permanently installed access point configured to wirelessly connect with an external device using a networking technology based on the Bluetooth standard and to enable connection of the external device to a wired and/or wireless network, in particular the internet, via the access point.

Determining a position estimate of an entity such as a mobile device using the positioning system may be performed at the entity itself and/or at a positioning entity such as a positioning server and/or server cloud. Thus, in an exemplary embodiment, the at least one first apparatus corresponds to or comprises the mobile device, a server and/or a server cloud.

Thereby, in case the at least one first apparatus corresponds to or comprises the mobile device, in an exemplary embodiment, obtaining the first information representative of the distance between a mobile device and the at least one of at least two first wireless access points comprises obtaining or causing obtaining the first information representative of the distance between the mobile device and the at least one of at least two first wireless access points based on communication with the at least one of the at least two first wireless access points.

In case the positioning processing is (additionally or alternatively) outsourced to a positioning server, the mobile device may be configured to transmit (e.g. relay) the first information to the positioning server. Thus, in such exemplary embodiment, obtaining the first information representative of the distance between a mobile device and the at least one of at least two first wireless access points comprises receiving or causing receiving the first information representative of the distance between the mobile device and the at least one of at least two first wireless access points from the at least one of the at least two first wireless access points.

In an exemplary embodiment, the first information representative of the distance between the mobile device and the at least one of the at least two first wireless access points corresponds to or comprises a Received Signal Strength Indication (RSSI) of a signal received at the mobile device from the at least one of the at least two first wireless access points. Based thereon, the at least one first apparatus may determine a distance between the mobile device and the at least one of the at least two first wireless access points such that a position estimate of the mobile device may be obtained by the at least one first apparatus employing a suitable trilateration processing (based on RSSIs of at least three first wireless access points). Alternatively or in addition, based on the obtained RSSI, the at least one first apparatus may determine a position estimate employing a fingerprinting processing, exploiting the fact that different combinations of signal strengths from different first wireless access points are uniquely related to different locations. Accordingly, in an exemplary embodiment, the second information representative of the distance between the mobile device and the at least one second wireless access point corresponds to or comprises an RSSI of a signal received at the mobile device from the at least one second wireless access point. Based thereon, the at least one first apparatus may determine a distance between the mobile device and the at least one second wireless access point.

Alternatively, or in addition, in an alternative embodiment, the first information representative of the distance between the mobile device and the at least one of the at least two first wireless access points corresponds to or comprises Round Trip Time (RTT) information and/or one or more RTT parameters. In other words, in an exemplary embodiment the first information corresponds to or comprises first round-trip time information representative of a respective round-trip time of at least one corresponding signal exchanged between the mobile device and at least one of the at least two first wireless access points. For example, in an exemplary embodiment, first round-trip time information is representative of or comprises one or more RTT parameters respectively corresponding to respective round-trip times of signals exchanged between the mobile device and respective one or more first wireless access points.

Thereby, it is noted that Round Trip Time (RTT) is defined as parameter of the IEEE 802.11 specification and may be referred to also as Wi-Fi Round Trip Time (RTT). For example, the mobile device may transmit a Fine Timing Measurement (FTM) request to the at least one of the at least two first wireless access points. The at least one of the at least two first wireless access points may then respond with a FTM response, which in turn is answered (e.g. with "ACK") by the mobile device. The at least one of the at least two first wireless access points may then return the time (e.g. "t1") it transmitted the first FTM response and the time it received the ACK (e.g. "t2") to the mobile device. The mobile device may then determine the RTT value as the difference between t1 and t2 from which the processing time the mobile device needs to respond to the first FTM response with the ACK is subtracted. As compared e.g. to RSSI-based position calculation, one of the benefits of RTT-based position calculation is that it is not dependent on the signal strength, which is fairly sensitive to the changes in the environment. Therefore, RTT-based position calculation is in particular advantageous for indoor positioning systems.

It is noted that in order to determine a position estimate of the mobile device without any additional position information of the mobile device, the at least one first apparatus is configured for determining the position estimate based on a suitable trilateration processing. In other words, in an exemplary embodiment, the first information is representative of at least three respective distances between the mobile device and at least three corresponding wireless access points; and determining the position estimate of the mobile device based at least in part on the obtained first information comprises employing or causing employing a processing based on trilateration at the at least one first apparatus.

As mentioned, as in case of the first information, in an exemplary embodiment, the second information representative of the distance between the mobile device and the at least one second wireless access point corresponds to or comprises a Received Signal Strength Indication (RSSI) of a signal received at the mobile device from the at least one second wireless access point. In an alternative or additional exemplary embodiment, the second information representative of the distance between the mobile device and the at least one second wireless access point corresponds to or comprises Round Trip Time (RTT) information and/or one or more RTT parameters. Thus, in an exemplary embodiment the second information corresponds to or comprises second round-trip time information representative of a round-trip time of a corresponding signal exchanged between the mobile device and the at least one second wireless access point. For example, in an exemplary embodiment, second round-trip time information is representative of or comprises one or more RTT parameters respectively corresponding to respective round-trip times of signals exchanged between the mobile device and respective one or more second wireless access points.

Thus, also as in case of the first information, the at least one first apparatus may be configured for obtaining the second information representative of the distance between the mobile device and the at least one second wireless access point based on communication between the mobile device and the at least one second wireless access point. In other words, the mobile device may transmit an FTM request to the at least one second wireless access point, may receive an FTM response from the at least one second wireless access point, may answer e.g. with "ACK", and may again receive an FTM response from the at least one second wireless access point. Based thereon, the mobile device may determine the RTT value based on the communication with the at least one second wireless access point. Thus, in an exemplary embodiment, the first round-trip time information and/or the second round-trip time information respectively corresponds to information obtained at the mobile device in response to a Fine Timing Measurement, FTM, request.

As mentioned, a first wireless access point as referred to herein is a wireless access point of known position. For example, in an exemplary embodiment, a position of each of the at least two first wireless access points is stored in a database, e.g. accessible by the positioning system, and/or is obtained by the at least first apparatus in combination with the first information. In order to be accessible by the positioning system, in an exemplary embodiment, the at least first apparatus is connected to the database. Further, in an exemplary embodiment, when determining a position estimate of the mobile device, the position estimate is determined in relation to the first wireless access points. In other words, in an exemplary embodiment, determining the position estimate of the mobile device is further based on position information of at least one of the at least two first wireless access points.

As further mentioned, a second wireless access point as referred to herein is a wireless access point of (yet) unknown position, the position of which is to be determined, e.g. at least in part by employing the method according to the first aspect. However, having determined a distance between the at least one second wireless access point and the mobile device, the position of which in relation to the at least two first wireless access points is determined based on the first information, this distance may for example be stored in the database, e.g. accessible to the positioning system, as at least part of a position of the at least one second wireless access point. Thus, in an exemplary embodiment, associating or causing associating the second information with the determined position estimate of the mobile device comprises:
- storing or causing storing the second information in association with the determined position estimate of the mobile device.

For example, in case the at least one first apparatus corresponds to or comprises the server and/or the server cloud, the at least one first apparatus may be configured to store the determined position estimate of the mobile device in association with the second information in a database connected with the server and/or the server cloud. Alternatively, in case the at least one first apparatus corresponds to or comprises the mobile device, the mobile device may transmit the determined position estimate of the mobile device in association with the second information to an external device, e.g. the server and/or the server cloud, to be stored in a database connected to the external device. Thus, in an exemplary embodiment, associating or causing associating the second information with the determined position estimate of the mobile device comprises:
- providing or causing providing the second information in association with the obtained position estimate to be accessible by an external apparatus.

In an exemplary embodiment, the method according to the first aspect comprises:
- determining or causing determining a position estimate of the at least one second wireless access point based at least in part on the second information and the position estimate of the mobile device associated with the second information.

For example, the position estimate may be determined based on the second information and the position estimate of the mobile device associated with the second information and based on further second information obtained by the mobile device at a different position in association with a corresponding different position estimate of the mobile device and/or based on further second information obtained by a further mobile device at a different position in association with a corresponding different position estimate of the further mobile device. Such further second information and such corresponding different position estimate may be further stored at and/or obtained from the database. In other words, in an exemplary embodiment, the method according to the first aspect comprises:
- accessing or causing accessing at least one further position estimate of the mobile device and/or of a further mobile device and corresponding further second information representative of a further distance between the mobile device and the at least one second wireless access point and/or between the further mobile device and the at least one second wireless access point, wherein the at least one further position estimate and the corresponding further second information are stored in a database;
- determining or causing determining the position estimate of the at least one second wireless access point further based on the at least one further position estimate and the corresponding further second information.

It is noted that thereby, the database may be connected to the server and/or the server cloud such that in case the at least one first apparatus corresponds to or comprises the server and/or the server cloud, the at least one first apparatus is in an exemplary embodiment configured for directly accessing the at least one further position estimate and the corresponding further second information. Further, the database may correspond to a storage device, e.g. a cloud storage device, accessible by the at least one first apparatus (e.g. the mobile device or the server/the server cloud) via a network communication path.

It is thereby further noted that in the context of the present disclosure, in an exemplary embodiment, network communication path is to be understood as a (bi-directional) wireless and/or wired connection i.e. a wireless connection that enables a network entity to transmit and receive data via said connection. Examples of a wireless connection include a wireless communication path or link in a wireless communication network, in particular a terrestrial wireless communication network like a Wireless Local Area Network (WLAN) or a cellular network. WLAN is for example specified by the standards of the IEEE 802.11 family (http://www.ieee.org/). A cellular network may for example be a mobile phone network like a 2G/3G/4G/5G cellular communication network. The 2G/3G/4G/5G cellular radio communication standards are developed by the 3GPP and presently available under http://www.3gpp.org/. A wireless connection may further include a Device-to-Device (D2D) communication path. Examples of a wired connection include a Local Area Network (LAN) connection, and/or any further wired computer connection, e.g. a bus, in particular a Universal Serial Bus (USB), connection, and/or in particular an internet connection.

While a position estimate of the mobile device may represent an accurate measure of the position of the mobile device, in an exemplary embodiment, the determined position estimate of the mobile device is associated with a level of confidence of the position estimate. Such level of confidence may for example correspond to or be determined based on a statistical parameter such as a standard deviation. The level of confidence may reflect an uncertainty for example of respective RTT measurements. In addition or alternatively, the level of confidence may reflect or be based on a level of confidence of a position of at least one of the at least two first wireless access points based on which the position estimate of the mobile device is in an exemplary embodiment determined. The latter case may in particular play a role if the positioning system is in a learning phase in which a position of at least one of the at least two first wireless access points may be available only within a given uncertainty range. In an exemplary embodiment, such level of confidence may be taken into account when associating the second information with the determined position estimate of the mobile device. In other words, in an exemplary embodiment, the method according to the first aspect comprises:
- associating or causing associating the second information with the determined position estimate of the mobile device and with a level of confidence of the determined position estimate of the mobile device.

Based thereon, the at least one first apparatus is in an exemplary embodiment configured for determining a level of confidence of the determined position estimate of the at least one second wireless access point. For example, if second information representative of more than three distances between respective mobile devices and the at least one second wireless access point are stored at the database in association with corresponding position estimates of the respective mobile devices and with corresponding levels of confidence of the respective position estimates, these levels of confidence may be taken into account when estimating a position of the at least one second wireless access point, e.g. based on trilateration processing. In this way, the respective levels of confidence of the position estimates of the mobile devices may translate into a corresponding level of confidence of a position estimate of the at least one second wireless access point.

Thus, in an exemplary embodiment, the method according to the first aspect comprises:
- determining or causing determining a level of confidence of the position estimate of the at least one second wireless access point based at least in part on a level of confidence of the determined position estimate of the mobile device and/or the accessed position estimate of the mobile device and/or of the further mobile device.

This information may be stored in the database, whereby the level of confidence of the position estimate of the at least one second wireless access point may be updated each time new second information is obtained in association with a corresponding position estimate of the/a mobile device.

Thus, in an exemplary embodiment, the method according to the first aspect comprises:
- storing the level of confidence of the position estimate of the at least one second wireless access point in association with the determined position estimate of the at least one second wireless access point, in particular at the database; and
- updating or causing updating the stored level of confidence of the position estimate of the at least one second wireless access point when the position estimate of the at least one second wireless access point is newly determined based on newly obtained second information and a newly obtained corresponding position estimate of a/the mobile device.

For example, when a new wireless access point (the at least one second wireless access point) is deployed for the first time at a new location within or at an edge of an area covered by the positioning system, its position may be unknown to the positioning system. When obtaining the second information and the corresponding position estimate of the mobile device for the first time, the positioning system starts to learn the location of the at least one second wireless access point of initially unknown position. At this stage, the at least one second wireless access point may be flagged by the positioning system (e.g. by the at least one first apparatus when corresponding to the positioning server having corresponding control capability of the positioning system) as "new" and/or "unqualified" wireless access point. Flagged in this way, at this stage, the new wireless access point may be ignored by the positioning processing when e.g. a mobile device is located by the positioning system.

Further, when the positioning system continues learning the position of the at least one second wireless access point by obtaining further second information and corresponding position estimate(s), the confidence level associated with the position estimate and being updated upon learning (further obtaining of second information and corresponding position estimate(s) of the/a mobile device) continuously increases. Once the confidence for the location estimate of the said AP exceeds a predefined threshold, the at least one second wireless access point may then be flagged as "qualified". In other words, in an exemplary embodiment, the method according to the first aspect comprises:
- determining or causing determining the at least one second wireless access point to be positioned at a position corresponding to a position estimate if the level of confidence of said position estimate is above a predefined threshold.

The at least one second wireless access point flagged as "qualified" may then be used in position calculations of mobile devices by the positioning system or may be used in locating further "unqualified" second wireless access points. In this way, the position estimates of second wireless access points which are for example further away from the at least two first wireless access points may gradually improve in a self-learning manner.

In an alternative or additional exemplary embodiment, determining the level of confidence of the position estimate of the at least one second wireless access point is based at least in part on a number of times a position estimate of the at least one second wireless access point is determined to be within a predefined distance interval from a position estimate of the at least one second wireless access point determined before. In other words, a position estimate is assumed to be trustable if a position of the at least one second wireless access point has been determined to be within the predetermined distance interval from this position estimate sufficiently often.

Thus, having determined such level of confidence, in an exemplary embodiment, the method according to the first aspect further comprises:
- determining or causing determining the at least one second wireless access point to be positioned at a position corresponding to a position estimate if the level of confidence of said position estimate is above a predefined threshold.

As disclosed above, in an exemplary embodiment, the first information corresponds to or comprises one or more Round Trip Time (RTT) parameters. Thereby, use of RTT-based position calculation turned out to be in particular beneficial as it is independent on signal strength which may be strongly dependent on the particular environment. The use of RTT-based position calculation thus turned out to be in particular advantageous for indoor positioning systems. However, as the RTT parameter has been introduced to the IEEE 802.11 specification only recently, there may be a need to replace wireless access points which do not support RTT location measurements by wireless access points which support RTT location measurement At the same time, it may be desirable to install wireless access points at optimized positions to enable high positioning accuracy. Solving such tasks, the method according to the first and second aspects of the present disclosure enable in particular an accelerated learning of locations of newly installed wireless access points (the at least one second wireless access point) that support RTT location measurements.

In other words, as also mentioned above, in an exemplary embodiment, the at least two first wireless access points and/or the at least one second wireless access point respectively correspond to or comprise wireless access points configured for supporting Round-Trip-Time (RTT) measurements as defined in the IEEE 802.11-2016 standard (and later versions thereof). Further, in an exemplary embodiment, the at least two first wireless access points and the at least one second wireless access point are respectively configured to transmit a response message in response to a Fine Timing Measurement, FTM, request as defined in the IEEE 802.11-2016 standard (and later versions thereof). As mentioned above, in an exemplary embodiment, at least one of (e.g. both of) the at least two first wireless access points corresponds to a mobile device. As mentioned, in this embodiment, the at least one of the at least two first wireless access points is referred to as RTT responder herein. While in an exemplary embodiment, a mobile device corresponds to or comprises a smartphone, it is noted that in an exemplary embodiment, a mobile device corresponds to or comprises an Internet-of-Things (IoT) device, a smart home device, a tablet computer, a notebook computer, a smart watch, and/or a smart band.

Thus, the methods according to the first and/or second aspects of the present disclosure in particular benefit from use of battery-operated mobile devices such as smart phones. Nowadays, such mobile devices are easily available and by installing an application or firmware, mobile devices may be configured to operate as a wireless access point (e.g. Wi-Fi AP) in particular with RTT support and/or as Bluetooth Low Energy (BLE) beacon with RTT support, and may thus be configured to respond to RTT requests (referred to in IEEE 802.11-2016 as Fine Timing Measurement (FTM) Request). Thus, employing mobile devices as first wireless access points is advantageous as such cordless RTT responders can be placed easily and quickly at points of interest within a target premise, for example utilizing temporary stands, or by placing the mobile devices on shelves or on top of cabinets, or by attaching the mobile devices to walls e.g. with adhesive tape. The RTT responders can thus advantageously be employed for helping a positioning system in learning unknown positions of wireless access points deployed within an area covered by the positioning system.

While use of mobile devices in particular as first wireless access points thus provides advantageous flexibility, it is noted that the methods according to the first and second aspects are not limited in this respect. In other words, in an exemplary embodiment, at least one of the at least two first wireless access points is a permanently installed wireless access point. Such permanently installed wireless access point is in an exemplary embodiment a permanently installed wireless access point, a Wireless Local Area Network (WLAN) or Wi-Fi base station or router and/or a BLE beacon. In addition, it is noted that the methods according to the first and second aspects are applicable to permanently installed and non-permanently installed wireless access points, a position estimate of which is not yet known to the positioning system (examples of the second wireless access point).

The following provides an example of utilizing RTT responders (examples of the at least two first wireless access points) as seed to accelerate availability of RTT-based positioning. In the example, it is assumed that a number of Wi-Fi APs are already present within an area of a target premise (such as a shopping mall). Additionally, a number of mobile devices configured as RTT responders are distributed within this area. For some of the Wi-Fi APs, a respective location is yet unknown to the positioning system.

One or more mobile devices then collect signal measurements from the RTT responders (ID + RTT measurement and/or Location + RTT measurement) and ID + RTT measurements from Wi-Fi APs for which a position has not been configured for the positioning system. The obtained information is then sent for example to a positioning server (an example of the at least one first apparatus). The positioning server then calculates position estimates of the RTT responders and stores the position estimates in association with information of RTT measurements received at the respective position estimates from such Wi-Fi APs of which a location has not been configured for the positioning system.

As the time goes by, further measurements are accumulated and the positioning server models the previously unknown locations of the corresponding Wi-Fi APs, which then can be used in position calculation. In this way, a small group of RTT responders can be used as a seed to make a large population of Wi-Fi APs "RTT positioning capable". In this example, if the RTT responders are used only as seed, they may be removed from the area afterwards and may be used as seed for setting up an RTT based positioning system in a different premise.

In the above example, the positioning server is used as example of the at least one first apparatus which obtains results of measurements performed by one or more mobile devices from the one or more mobile devices. In other words, in such case, in an exemplary embodiment the method according to the first aspect comprises:
- receiving or causing receiving the first information and/or the second information from the mobile device.

For example, in an exemplary embodiment, the first information and/or the second information may be received at the server via the above disclosed network communication path.

When processing such as positioning processing may thus be outsourced to a positioning server as an example of the at least one first apparatus, the mobile device may correspond to or comprise the at least one second apparatus which is in particular configured for providing the second information obtained at the mobile device in association with the obtained first information to be accessible by an external device, e.g. by the positioning server, to be processed. It is however noted that the processing itself may alternatively or in addition be performed at the mobile device. The mobile device is in such exemplary embodiment a further example of the at least one first apparatus configured for performing any of the steps of the method according to the first aspect.

It is to be understood that the presentation of the present disclosure in this section is merely by way of examples and non-limiting.

Other features of the present disclosure will become apparent from the following detailed description considered in conjunction with the accompanying figures. It is to be understood, however, that the figures are designed solely for purposes of illustration and not as a definition of the limits of the present disclosure, for which reference should be made to the appended claims. It should be further understood that the figures are not drawn to scale and that they are merely intended to conceptually illustrate the structures and procedures described herein.

### BRIEF DESCRIPTION OF THE FIGURES

- Fig. 1: is a block diagram of a system in accordance with an exemplary embodiment;
- Fig. 2: is a block diagram of the at least one second apparatus according to an exemplary embodiment;
- Fig. 3: is a block diagram of the at least one first apparatus according to an exemplary embodiment;
- Fig. 4: is a flow chart illustrating a method according to an exemplary embodiment of the first aspect;
- Fig. 5: is a flow chart illustrating a method according to an exemplary embodiment of the second aspect;
- Fig. 6: is a flow chart illustrating a further method according to an exemplary embodiment; and
- Fig. 7: is a schematic illustration of examples of tangible storage media according to the present disclosure.

### DETAILED DESCRIPTION

The following description serves to deepen the understanding of the present disclosure and shall be understood to complement and be read together with the description of example embodiments of the present disclosure as provided in the above SUMMARY section of this specification.

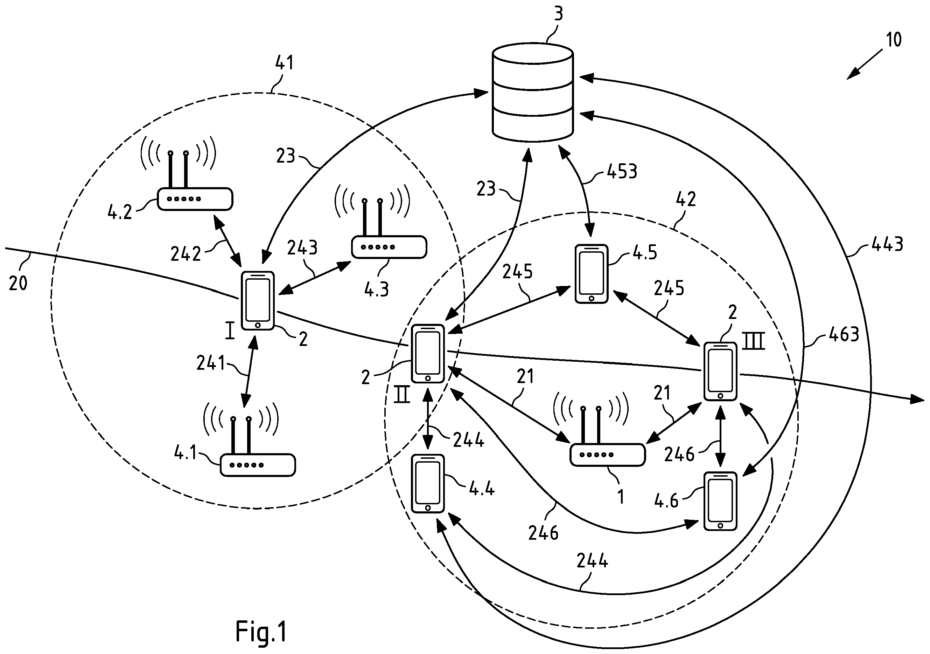

Fig. 1 is a schematic high-level block diagram of a system 10 according to an exemplary embodiment. As disclosed above, while some or all steps of a method according to the first aspect and/or of the second aspect may in part or fully be performed by one or more mobile devices and/or by a centralized entity such as a network server, may be performed by a single one of these entities and/or may be performed in a distributed manner, without limiting the scope of the invention and only exemplarily, it is assumed in the following that the at least one first apparatus is embodied by a network server 3. Accordingly, it is assumed in the following that the at least one second apparatus is embodied by mobile device 2.

Fig. 1 shows mobile device 2 moving along path 20 in a premise such as a shopping mall. At position I shown in Fig. 1, mobile device 2 is located in an area 41 of wireless signal coverage of fixedly installed Wi-Fi routers 4.1, 4.2 and 4.3 which are part of a network of wireless access points forming an indoor positioning system deployed in the premise. In this example, positions of Wi-Fi routers 4.1, 4.2 and 4.3 are known to the positioning system, i.e. for example identification information of Wi-Fi routers 4.1, 4.2 and 4.3 is stored in relation to map data and/or position data at a database of server 3 accessible for mobile device 2 and/or at one or more of Wi-Fi routers 4.1, 4.2 and 4.3 to be transmitted to mobile device 2.

Arrows 241, 242, 243 and 23 show mobile device 2 exchanging signals with Wi-Fi routers 4.1,4.2 and 4.3 and/or with server 3 for positioning of mobile device 2. For example, mobile device 2 is configured to transmit a Fine Timing Measurement (FTM) request as defined in the IEEE 802.11-2016 standard (and later versions thereof). The Wi-Fi routers 4.1, 4.2 and 4.3 being configured for supporting Round-Trip-Time (RTT) measurements as defined in this standard, Wi-Fi routers 4.1, 4.2 and 4.3 respond to the FTM request with a response message at a point in time t1 which is responded by mobile device 2 e.g. by an ACK message received at a corresponding router at point in time t2. This router sends RTT information (exemplary first information) corresponding to or comprising the time difference t2-t1 back to mobile device 2 which then calculates the corresponding signal round-trip-time e.g. by subtracting necessary processing time at the mobile device from the time difference t2-t1. Mobile device 2 may further obtain identification information and/or position information from and of each of Wi-Fi routers 4.1, 4.2 and 4.3. For example, the identification information may be used to derive position information of Wi-Fi routers 4.1, 4.2 and 4.3, e.g. from corresponding map data. Based on the so obtained information, mobile device 2 may estimate its position and/or may transmit the obtained information to server 3 via communication path 23 so that server 3 may estimate the position of mobile device 2.

Continuing its way along path 20, mobile device 2 enters an area 42 of coverage of newly installed Wi-Fi wireless access point 1, a position of which is not yet known to the indoor positioning system. Mobile devices 4.4, 4.5 and 4.6 (respective examples of the at least one first wireless access point) which are configured to operate as wireless access points and which are in particular configured for supporting Round-Trip-Time (RTT) measurements as defined in the IEEE 802.11-2016 standard (and later versions thereof) are distributed in area 42 as auxiliary wireless access points to enable the indoor positioning system to learn a position of wireless access point 1 in an automatized manner. These mobile devices will be referred to as RTT responders 4.4, 4.5 and 4.6 in the following.

While for illustrating the principle, Fig. 1 shows only a single wireless access point 1 of unknown position, it is noted that deployment of RTT responders 4.4, 4.5 and 4.6 may similarly enable the positioning system to learn positions of further wireless access points deployed in area 42 which may correspond to an area of the premise where wireless access points not supporting RTT based positioning are replaced by wireless access points supporting RTT based positioning and/or an area of the premise where the indoor positioning system is newly installed.

Continuing the example of Fig. 1, it is noted that respective positions of RTT responders 4.4, 4.5 and 4.6 are known to the indoor positioning system, e.g. respective position information and/or identification information may be stored at a database connected to server 3. Exemplarily, when installing one or more of RTT responders 4.4, 4.5 and 4.6, a user who deploys the RTT responders may use in a corresponding mobile device (e.g. a smart phone) a purpose-built application which may be referred to as "Configurator". The Configurator may visualize a floor plan or venue map of the premise and may enable the user to enter the position of the corresponding RTT responder being deployed for example by tapping a corresponding map view at a user interface provided by the mobile device. For associating identification information of the RTT responder, e.g. a MAC address of the RTT responder, with its position, the Configurator may be configured to supply the identification information in association with position information to the positioning system, e.g. to server 3 via any one of communication paths 443, 453 or 463. The MAC address may be obtained by the Configurator by prompting the user to enter the MAC address or by internal communication between the Configurator and the corresponding mobile device.

Thus, while moving along path 20 from position II to position III, mobile device 2 may communicate with RTT responders 4.4, 4.5 and 4.6 via communication paths 244, 245, 246 and/or with server 3 via communication path 23 and one or more position estimates of mobile device 2 along path 20 may be obtained in area 42 based on RTT information (exemplary first information) received from RTT responders 4.4, 4.5 and 4.6 at mobile device 2 in a corresponding manner as position estimates of mobile device 2 are obtained in area 41 based on communication with Wi-Fi access points 4.1, 4.2 and 4.3.

When performing communication with RTT responders 4.4, 4.5 and 4.6 for obtaining a position estimate e.g. at position II, mobile device 2 additionally performs communication with wireless access point 1 via communication path 21. For example, mobile device may transmit an FTM request to wireless access point 1 and may obtain RTT information (exemplary second information) from wireless access point 1 based thereon. Mobile device 2 may then transmit the RTT information received from any one or all RTT responders 4.4, 4.5 and 4.6 at position II (the exemplary first information) and/or a position estimate determined based thereon (the position estimate being a further example of first information) to server 3 in combination with the RTT information received from wireless access point 1 at position II (the exemplary second information). Server 3 may thereby obtain the first information and the second information. Server 3 may determine a position estimate of mobile device 2 based on the RTT information received by mobile device 2 at position II transmitted by mobile device 2 to server 3 or may use a position estimate determined by and received from mobile device 2 to associate the second information obtained from mobile device 2 with the position estimate of mobile device 2 at position II, for example, by storing the position estimate in association with the second information at a database connected to server 3. Similarly, mobile device 2 may communicate with RTT responders 4.4, 4.5 and 4.6 and with wireless access point 1 at position III and may transmit first and second obtained at position III to server 3.

In this way, position estimates of mobile device 2 may be obtained and stored at server 3 in association with corresponding distances between mobile device 2 at the respective positions and wireless access point 1. Thus, by accumulating position estimates of mobile device 2 (and/or of one or more further mobile devices) in association with respective distances to wireless access point 1, it becomes possible to derive the position of wireless access point 1. In other words, by obtaining and associating position estimates and corresponding second information, a position estimate of the wireless access point 1 (the at least one second wireless access point) can be obtained based at least in part on the second information and the position estimate of the mobile device associated with the second information. In addition or alternatively, if, as disclosed above, for example a position estimate obtained for mobile device 2 is provided with a level of confidence (e.g. based on a level of confidence associated with a position of one or more of RTT responders 4.4, 4.5 and 4.6), such level of confidence may be used for calculating a corresponding level of confidence of a position estimate calculated for wireless access point 1 based on one or more respective position estimates of mobile device 2 and corresponding associated second information. In this case, for example a flag set for wireless access point 1 at the positioning system (e.g. in the database connected to server 3) may be changed from a value indicating "unqualified" to a value indicating "qualified" when the level of confidence matches or exceeds a predefined threshold value. Once wireless access point 1 is determined to be a "qualified" wireless access point, it may then be used as a wireless access point of the positioning system for example for estimating positions of mobile devices moving within area 42.

It is noted that any of the communication paths shown in Fig. 1 may be direct or indirect communication paths. For example, any of the communication paths shown in Fig. 1 may comprise one or more hops, for example one or more communication links or communication connections. In the context of the present disclosure communication paths are to be understood as (bi-directional) wireless communication connections like 2G/3G/4G/5G cellular wireless connections, Device-to-Device (D2D) communication paths, (bi-directional) wireless communication connections such as Wireless Local Area Network (WLAN) connections, and/or wired computer connections such as computer buses.

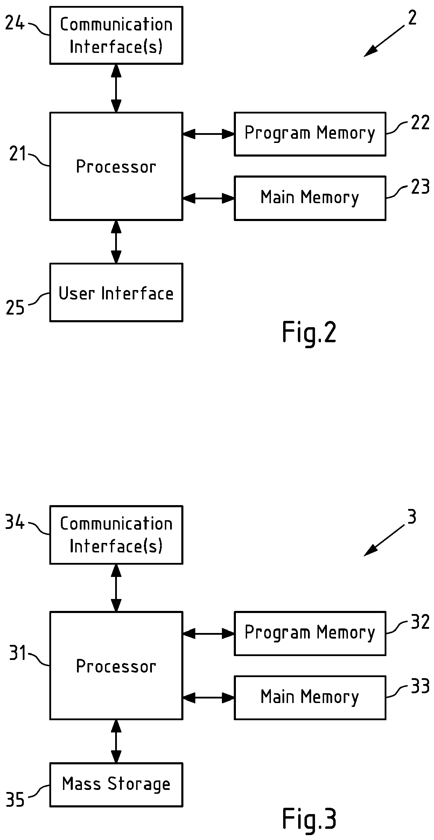

Fig. 2 is a block diagram of mobile device 2 of Fig. 1 as an example of the at least one second apparatus configured for performing the method according to the second aspect of the present disclosure.

Mobile device 2 comprises a processor 21. Processor 21 may represent a single processor or two or more processors, which are for instance at least partially coupled, for instance via a bus. Processor 21 may use program memory 22 and main memory 23 to execute a program code stored in program memory 22 (for instance program code causing mobile device 2 to perform embodiments of the different methods, when executed on processor 21). Some or all of memories 22 and 23 may also be included into processor 21. One of or both of memories 22 and 23 may be fixedly connected to processor 21 or at least partially removable from processor 21. Program memory 22 may for instance be a non-volatile memory. It may for instance be a FLASH memory, any of a ROM, PROM, EPROM and EEPROM memory or a hard disc, to name but a few examples. Program memory 22 may also comprise an operating system for processor 21. Main memory 23 may for instance be a volatile memory. It may for instance be a RAM or DRAM memory, to give but a few non-limiting examples. It may for instance be used as a working memory for processor 21 when executing an operating system and/or programs.

Processor 21 further controls one or more communication interfaces 24 configured to receive and/or send information. For instance, mobile device 2 may be configured to communicate with server 3 of system 10 of Fig. 1. Such a communication may for instance comprise providing or causing providing the second information in association with the obtained first information to be accessible by server 3. Also, mobile device 2 may be able to obtain (e.g. receive) e.g. RTT information as first information from any one or all of RTT responders 4.4, 4.5 or 4.6. Such communication may for instance be based on a (e.g. partly) wireless connection. Communication interface 24 may thus comprise circuitry such as modulators, filters, mixers, switches and/or one or more antennas to allow transmission and/or reception of radio signals. In embodiments of the present disclosure, communication interface 24 is inter alia configured to allow communication according to a 2G/3G/4G/5G cellular communication system and/or a non-cellular communication system, such as for instance a WLAN/Wi-Fi network and/or a Bluetooth network.

Processor 21 further controls a user interface 25 configured to present information to a user of mobile device 2 and to receive information from such a user, such as an indoor map of the premise or the like. User interface 25 may for instance be the standard user interface via which a user of mobile device 2 controls other functionality thereof, such as making phone calls, browsing the Internet, etc.

The components 22-25 of mobile device 2 may for instance be connected with processor 21 by means of one or more serial and/or parallel busses.

Fig. 3 is a block diagram of server 3 of Fig. 1 as an example of the at least one first apparatus configured for performing a method according to the first aspect of the present disclosure.

Server 3 comprises a processor 31. Processor 31 may represent a single processor or two or more processors, which are for instance at least partially coupled, for instance via a bus. Processor 31 may use program memory 32 and main memory 33 to execute a program code stored in program memory 32 (for instance program code causing server 3 to perform embodiments of the different methods, when executed on or by processor 31). Some or all of memories 32 and 33 may also be included into processor 31. One of or both of memories 32 and 33 may be fixedly connected to processor 31 or at least partially removable from processor 31. Program memory 32 may for instance be a non-volatile memory. It may for instance be a FLASH memory, any of a ROM, PROM, EPROM and EEPROM memory or a hard disc, to name but a few examples. Program memory 32 may also comprise an operating system for processor 31. Main memory 33 may for instance be a volatile memory. It may for instance be a RAM or DRAM memory, to give but a few non-limiting examples. It may for instance be used as a working memory for processor 31 when executing an operating system and/or programs.

Processor 31 further controls one or more communication interfaces 34 configured to receive and/or send information. For instance, server 3 may be configured to communicate with mobile device 2 of system 10 of Fig. 1 (corresponding to mobile device 2 of Fig. 2). Such a communication may for instance comprise receiving (e.g. obtaining) the first information representative of a distance between mobile device 2 and at least one of at least two of wireless access points 4.4, 4.5, 4.6 (first wireless access points). For example, RTT information may be obtained by mobile device 2 from any one or all of wireless access points 4.4, 4.5, 4.6 and may be transmitted to server 3 to be received by server 3 via communication interface 34. The communication may for instance be based on a (e.g. partly) wireless connection. The communication interface 34 may thus comprise circuitry such as modulators, filters, mixers, switches and/or one or more antennas to allow transmission and/or reception of signals. In embodiments of the present disclosure, communication interface 34 is inter alia configured to allow communication according to a 2G/3G/4G/5G cellular communication system and/or a non-cellular communication system, such as for instance a WLAN network and/or a Bluetooth network.

Processor 31 further interfaces with a mass storage 35, which may be part of the server 3 or remote from server 3, and which may for instance be used to store in particular the mentioned database. For instance, server 3 may store, in the database, obtained first and/or second information and may be configured to determine a position estimate of wireless access point 1 based thereon.

The components 32-35 of server 3 may for instance be connected with processor 31 by means of one or more serial and/or parallel busses.

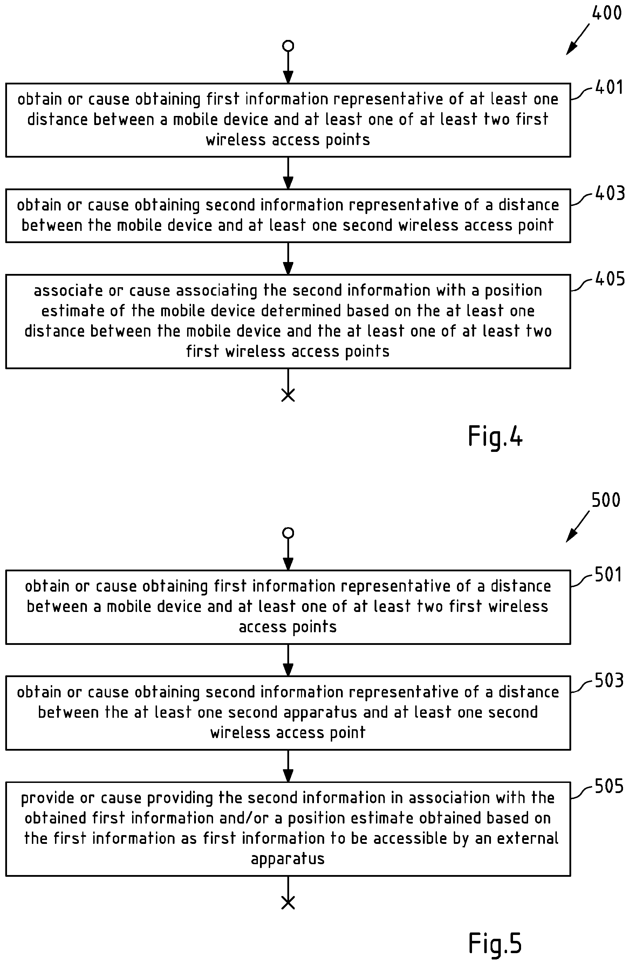

The methods of the different aspects will now be described in more detail with respect to Fig. 4 to 6.

Fig. 4 is a flowchart 400 illustrating an example of a method according to the first aspect of the present disclosure. Without limiting the scope of the invention, it is assumed in the following that server 3 (an example of the at least one first apparatus) as disclosed above with respect to system 10 of Fig. 1 performs the steps of flowchart 400. It is to be understood that any step of flowchart 400 may be performed by any one or more than one apparatus (e.g. one or more processors of server 3). It is further noted that in an alternative embodiment not shown in the figures, the steps of flowchart 400 may all or in part be performed by mobile device 2.

In a step 401, server 3 obtains (or processor 31 of server 3 causes server 3 to obtain) first information representative of a distance between a mobile device and at least one of at least two first wireless access points. For example, server 3 may obtain from mobile device 2 RTT information as an example of first information obtained by mobile device from any one or more of wireless access points 4.4, 4.5, or 4.6 and may determine a position estimate of mobile device 2 based thereon. Alternatively or in addition, server 3 may obtain the position estimate of mobile device 2 determined by mobile device 2 based on the RTT information obtained from any one or more of wireless access points 4.4, 4.5, or 4.6, the position estimate corresponding in this case to an example of first information.

In a step 403, server 3 obtains (or processor 31 of server 3 causes server 3 to obtain) second information representative of a distance between the mobile device and at least one second wireless access point. For example, server 3 may obtain (e.g. receive) from mobile device 2 RTT information obtained by mobile device 2 from wireless access point 1 representing a round trip time of a signal exchanged between mobile device 2 and wireless access point 1 and thus representing a distance between the mobile device 2 and the wireless access point 1.

In a step 405, server 3 associates (or processor 31 of server 3 causes server 3 to associate) the second information with the position estimate of mobile device 2 determined at server 3 and/or at mobile device 2 based on the at least one distance between the mobile device and the at least one of at least two first wireless access points. For example, server 3 may associate the second information with the position estimate by storing the second information in association with the position estimate in the database. It is noted that in the alternative (or additional) case in which mobile device 2 performs steps of the method according to the first aspect, mobile device 2 may in such case associate the second information with the position estimate by transmitting the second information in association with the position estimate to server 3 to be stored by server 3 in the database.

As explained above, by successively obtaining information on positions in the vicinity for example of wireless access point 1 as an example of the at least one second wireless access point, and by relating this information to respective distances between such positions and wireless access point 1, it becomes possible to determine a position of wireless access point 1 in an automatized manner and/or to gradually improve a level of confidence of a position estimate of wireless access point 1.

Fig. 5 is a flowchart 500 illustrating an example of a method according to the second aspect of the present disclosure. Without limiting the scope of the invention, it is assumed in the following that mobile device 2 (an example of the at least one second apparatus) as disclosed above with respect to system 10 of Fig. 1 performs the steps of flowchart 500. It is to be understood that any step of flowchart 500 may be performed by any one or more than one apparatus (e.g. one or more processors of mobile device 2).

In a step 501, mobile device 2 obtains (or processor 21 of mobile device 2 causes mobile device 2 to obtain) first information representative of a distance between the mobile device 2 and at least one of at least two first wireless access points. For example, mobile device 2 may obtain from any one or more of wireless access points 4.4, 4.5, or 4.6 RTT information as an example of first information representative of a distance between mobile device 2 and the one or more of wireless access points 4.4, 4.5, or 4.6.

In a step 503, mobile device 2 obtains (or processor 21 of mobile device 2 causes mobile device 2 to obtain) second information representative of a distance between the at least one second apparatus and at least one second wireless access point. For example, mobile device 2 may obtain (e.g. receive) from wireless access point 1 RTT information representing a round trip time of a signal exchanged between mobile device 2 and wireless access point 1 and thus representing a distance between the mobile device 2 and the wireless access point 1.

In a step 505, mobile device 2 provides (or processor 21 of mobile device 2 causes mobile device 2 to provide) the second information in association with the obtained first information and/or a position estimate obtained based on the first information as first information to be accessible by an external apparatus. For example, mobile device 2 may transmit the obtained second information in association with the obtained first information to server 3 (an example of the external apparatus). Alternatively or in addition, mobile device 2 may estimate its position based on the obtained first information and may transmit a corresponding position estimate in association with the obtained second information to server 3.

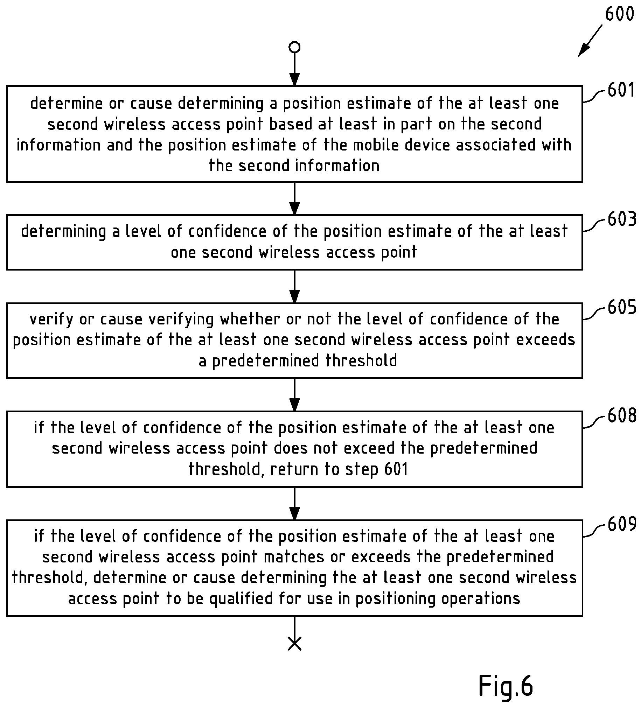

Fig. 6 is a flowchart 600 illustrating an exemplary method according to an exemplary embodiment of the present disclosure. Without limiting the scope of the invention, it is assumed in the following that server 3 as disclosed above with respect to system 10 of Fig. 1 performs the steps of flowchart 600. It is to be understood that any step of flowchart 600 may be performed by any one or more than one apparatus (e.g. one or more processors of server 3). It is further assumed without limitation that the steps of flowchart 600 are performed in combination or after the steps of flowchart 400.

In a step 601, server 3 determines (or processor 31 of server 3 causes server 3 to determine) a position estimate of the at least one second wireless access point based at least in part on the second information and the position estimate of the mobile device associated with the second information. For example, server 3 may determine a position of wireless access point 1 based on three positions of mobile device 2 in the vicinity of wireless access point 1 and corresponding distances between mobile device 2 and wireless access point 1. Alternatively or in addition, server 3 may determine a position estimate of wireless access point 1 based on one or more positions of mobile device 2 and corresponding distances in combination with positions of further mobile devices and corresponding distances stored at the database of server 3.

In a step 603, server 3 determines (or processor 31 of server 3 causes server 3 to determine) a level of confidence of the position estimate of the at least one second wireless access point. As disclosed above, server 3 may determine the level of confidence of the position estimate of wireless access point 1 based on the number of times the position of wireless access point 1 has been determined to be within a predetermined are and/or within a statistical value, e.g. a standard deviation, of a predetermined number of estimates of the position of wireless access point 1. In an exemplary embodiment, server 3 is configured to determine the level of confidence of the position estimate of the at least one second wireless access point based on the obtained level of confidence of the position estimate of the mobile device.

In other words, in an exemplary embodiment, the method according to the first aspect comprises a step of determining or causing determining the level of confidence of the position estimate of the at least one second wireless access point based on the obtained level of confidence of the position estimate of the mobile device. For example, in case mobile device 2 determines the position estimate, mobile device 2 may in addition also determine the level of confidence of the position estimate of mobile device 2, e.g. as a statistical value that may follow from the calculation of the position estimate or as an independent value. Mobile device 2 may in such case transmit a parameter indicative of the level of confidence in combination with the determined position estimate to server 3. In case the position estimate is determined at server 3, the level of confidence may in such case be determined at server 3.

In a step 605, server 3 verifies (or processor 31 of server 3 causes server 3 to verify) whether or not the level of confidence of the position estimate of wireless access point 1 exceeds a predetermined threshold. If the confidence level of the position estimate of wireless access point 1 does not exceed the predetermined threshold, the level of confidence determined in step 603 may be stored in the database in combination with the position estimate determined in step 601. Then, method 600 may return to step 601 at step 608 and perform steps 601 to 605. If again, the level of confidence of the position estimate of wireless access point 1 does not exceed the predetermined threshold server 3 may update the level of confidence previously stored in combination with the position estimate of wireless access point 1.

If at step 609, server 3 determines that the level of confidence of the position estimate of the at least one second wireless access point matches or exceeds the predetermined threshold, server 3 determines wireless access point 1 to be qualified for use in positioning operations. For example, after being newly installed, when its position is unknown to the positioning system, a flag may be set (e.g. at the database of the server 3) for wireless access point 1 indicating that wireless access point 1 is "new" and/or "unqualified", i.e. not to be used for positioning operations of the positioning system (e.g. determining a position estimate of a mobile device moving within area 42). Once the confidence level of the position estimate of wireless device 1 is at or above the predefined threshold, server 3 may determine wireless access point 1 to be qualified for use in positioning operations of the positioning system by setting the flag to "qualified". Wireless access point 1 may then be used in positioning operations of determining positions of mobile devices and/or further wireless access points within area 42, the position of which are (yet) unknown and/or are associated with a confidence level below the predefined threshold.

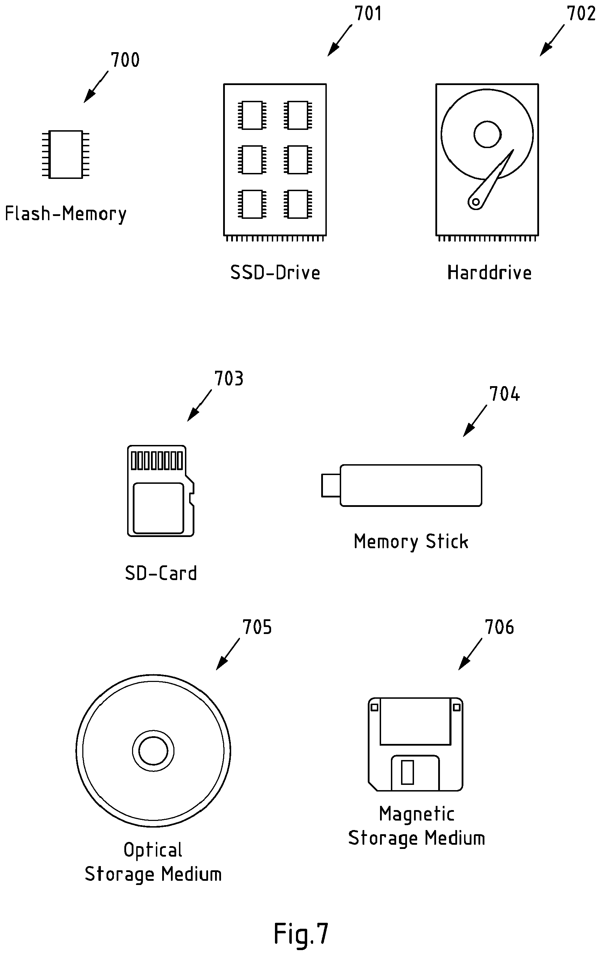

Fig. 7 is a schematic illustration of examples of tangible and non-transitory computer-readable storage media according to the present disclosure that may for instance be used to implement memory 22 of Fig. 2 or memory 32 of Fig. 3. To this end, Fig. 7 displays a flash memory 700, which may for instance be soldered or bonded to a printed circuit board, a solid-state drive 701 comprising a plurality of memory chips (e.g. Flash memory chips), a magnetic hard drive 702, a Secure Digital (SD) card 703, a Universal Serial Bus (USB) memory stick 704, an optical storage medium 705 (such as for instance a CD-ROM or DVD) and a magnetic storage medium 706.

The following example embodiments are also disclosed:
Embodiment 1
   A method performed by at least one first apparatus, the method comprising:
   - obtaining or causing obtaining first information representative of a distance between a mobile device and at least one of at least two first wireless access points;
   - obtaining or causing obtaining second information representative of a distance between the mobile device and at least one second wireless access point; and
   - associating or causing associating the second information with a position estimate of the mobile device determined based on the at least one distance between the mobile device and the at least one of at least two first wireless access points.
Embodiment 2
   The method according to embodiment 1, further comprising:
   - determining or causing determining a position estimate of the mobile device based at least in part on the obtained first information.
Embodiment 3
   The method according to any of embodiments 1 or 2, further comprising:
   - obtaining or causing obtaining identification information of the at least one of at least two first wireless access points; and
   - determining or causing determining a position estimate of the mobile device based at least in part on the obtained first information and based on the obtained identification information.
Embodiment 4
   The method according to any of the preceding embodiments, further comprising:
   - obtaining or causing obtaining position information of the at least one of at least two first wireless access points; and
   - determining or causing determining a position estimate of the mobile device based at least in part on the obtained first information and based on the obtained position information.
Embodiment 5
   The method according to any of embodiments 1 to 4; wherein obtaining the first information representative of the distance between a mobile device and the at least one of at least two first wireless access points comprises at least one of:
   - obtaining or causing obtaining the first information representative of the distance between the mobile device and the at least one of at least two first wireless access points based on communication with the at least one of the at least two first wireless access points;
   - receiving or causing receiving the first information representative of the distance between the mobile device and the at least one of at least two first wireless access points from the mobile device.
Embodiment 6
   The method according to embodiment 5, wherein the first information is representative of at least three respective distances between the mobile device and at least three corresponding wireless access points; and wherein determining the position estimate of the mobile device based at least in part on the obtained first information comprises:
   - employing or causing employing a processing based on trilateration at the at least one first apparatus.
Embodiment 7
   The method according to any of embodiments 1 to 6, wherein associating the second information with the determined position estimate of the mobile device comprises at least one of:
   - storing or causing storing the second information in association with the determined position estimate of the mobile device;
   - providing or causing providing the second information in association with the obtained position estimate to be accessible by an external apparatus, in particular via a network communication path.
Embodiment 8
   The method according to any of embodiments 1 to 7, further comprising:
   - determining or causing determining a position estimate of the at least one second wireless access point based at least in part on the second information and the position estimate of the mobile device associated with the second information.
Embodiment 9
   The method according to any of embodiments 1 to 8, wherein the at least two first wireless access points are comprised by a network of access points of a positioning system unaware of a position of the at least one second wireless access point before the second information representative of the distance between the mobile device and the at least one second wireless access point is obtained and/or before a position estimate of the at least one second wireless access point is determined.
Embodiment 10
   The method according to any of embodiments 1 to 9, wherein the first information is first round-trip time information representative of a respective round-trip time of at least one corresponding signal exchanged between the mobile device and at least one of the at least two first wireless access points and/or wherein the second information is second round-trip time information representative of a round-trip time of a corresponding signal exchanged between the mobile device and the at least one second wireless access point.
Embodiment 11
   The method according to any of embodiments 1 to 10, further comprising:
   - accessing or causing accessing at least one further position estimate of the mobile device and/or of a further mobile device and corresponding further second information representative of a further distance between the mobile device and the at least one second wireless access point and/or between the further mobile device and the at least one second wireless access point, wherein the at least one further position estimate and the corresponding further second information are stored in a database;
   - determining or causing determining the position estimate of the at least one second wireless access point further based on the at least one further position estimate and the corresponding further second information.
Embodiment 12
   The method according to any of embodiments 1 to 11, further comprising:
   - associating or causing associating the second information with the determined position estimate of the mobile device and with a level of confidence of the determined position estimate of the mobile device.
Embodiment 13
   The method according to any of embodiments 1 to 12, further comprising:
   - storing the level of confidence of the position estimate of the at least one second wireless access point in association with the determined position estimate of the at least one second wireless access point, in particular at the database; and
   - updating or causing updating the stored level of confidence of the position estimate of the at least one second wireless access point when the position estimate of the at least one second wireless access point is newly determined based on newly obtained second information and a newly obtained corresponding position estimate of a/the mobile device.
Embodiment 14
   The method according to any of embodiments 1 to 13, further comprising:
   - determining or causing determining a level of confidence of the position estimate of the at least one second wireless access point based at least in part on one or more of:
      - a level of confidence of the determined position estimate of the mobile device and/or the accessed position estimate of the mobile device and/or of the further mobile device;
      - a number of times a position estimate of the at least one second wireless access point is determined to be within a predefined distance interval from a position estimate of the at least one second wireless access point determined before;
   the method further comprising:
   - determining or causing determining the at least one second wireless access point to be positioned at a position corresponding to a position estimate if the level of confidence of said position estimate is above a predefined threshold.
Embodiment 15
   The method according to any of embodiments 1 to 14, wherein at least one of the at least two first wireless access points is a mobile device configured for performing functions of a wireless access point; and/or wherein at least one of the at least two first wireless access points is a permanently installed wireless access point.
Embodiment 16
   The method according to any of embodiments 1 to 15, wherein the first round-trip time information and/or the second round-trip time information respectively corresponds to information obtained at the mobile device in response to a Fine Timing Measurement, FTM, request.
Embodiment 17
   The method according to any of embodiments 1 to 16, further wherein the at least one first apparatus corresponds to or is comprised by at least one of:
   - the mobile device;
   - a server;
   - a server cloud.
Embodiment 18
   The method according to any of embodiments 1 to 17, wherein obtaining the first information and/or the second information comprises:
   - receiving or causing receiving the first information and/or the second information from the mobile device, in particular via the network communication path.
Embodiment 19
   The method according to any of embodiments 1 to 18, wherein the at least two first wireless access points and/or the at least one second wireless access point respectively correspond to or comprise wireless access points configured for supporting Round-Trip-Time (RTT) measurements as defined in the IEEE 802.11-2016 standard (and later versions thereof).
Embodiment 20
   The method according to any of embodiments 1 to 19, wherein the at least two first wireless access points and the at least one second wireless access point are respectively configured to transmit a response message in response to a Fine Timing Measurement, FTM, request.
Embodiment 21
   The method according to any of embodiments 1 to 20, wherein at least one wireless access point of the at least two first wireless access points and/or of the at least one second wireless access points corresponds to or comprises at least one of:
   - a permanently installed, in particular not moveable or not intended to be moved, access point configured to wirelessly connect with an external device using a networking technology based on the IEEE 802.11 family of standards and to enable connection of the external device to a wired and/or wireless network, in particular the internet, via the access point;
   - a permanently installed, in particular not moveable or not intended to be moved, access point configured to wirelessly connect with an external device using a networking technology based on the Bluetooth standard and to enable connection of the external device to a wired and/or wireless network, in particular the internet, via the access point;
   - a non-permanently installed access point configured to wirelessly connect with an external device using a networking technology based on the IEEE 802.11 family of standards and to enable connection of the external device to a wired and/or wireless network, in particular the internet, via the access point;
   - a non-permanently installed access point configured to wirelessly connect with an external device using a networking technology based on the Bluetooth standard and to enable connection of the external device to a wired and/or wireless network, in particular the internet, via the access point.
Embodiment 22
   The method according to embodiment 21, wherein a permanently installed access point corresponds to or comprises an access point fixedly installed at a predetermined location and/or an access point not intended to be moved.
Embodiment 23
   The method according to any of embodiments 21 to 22, wherein a non-permanently installed access point corresponds to or comprises one or more of:
   - a device removably installed at a location and configured for performing operations of a wireless access point;
   - a battery-operated device configured for performing operations of a wireless access point;
   - a mobile device configured for performing operations of a wireless access point, in particular of a Wi-Fi AP with RTT support and/or as Bluetooth Low Energy (BLE) beacon with RTT support.
Embodiment 24
   The method according to embodiment 23, wherein being configured for performing operations of a wireless access point comprises being configured for connecting with an external device, e.g. a further mobile device, to enable connection of the external device to a network, in particular to the Internet.
Embodiment 25
   The method according to any of embodiments 1 to 24,
   - wherein the first information representative of the distance between the mobile device and the at least one of the at least two first wireless access points corresponds to or comprises a Received Signal Strength Indication (RSSI) of a signal received at the mobile device from the at least one of the at least two first wireless access points; and/or
   - wherein the second information representative of the distance between the mobile device and the at least one second wireless access point corresponds to or comprises an RSSI of a signal received at the mobile device from the at least one second wireless access point.
Embodiment 26
   The method according to any of embodiments 1 to 2 5, wherein the first information representative of the distance between the mobile device and the at least one of the at least two first wireless access points corresponds to or comprises at least one of:
   - Round Trip Time (RTT) information and/or one or more RTT parameters;
   - first round-trip time information representative of a respective round-trip time of at least one corresponding signal exchanged between the mobile device and at least one of the at least two first wireless access points.
Embodiment 27
   The method according to embodiment 2 6, wherein the first round-trip time information is representative of or comprises one or more RTT parameters respectively corresponding to respective round-trip times of signals exchanged between the mobile device and respective one or more first wireless access points.
Embodiment 28
   The method according to any of embodiments 1 to 2 7, wherein the second information representative of the distance between the mobile device and the at least one second wireless access point corresponds to or comprises at least one of:
   - Round Trip Time (RTT) information and/or one or more RTT parameters
   - second round-trip time information representative of a round-trip time of a corresponding signal exchanged between the mobile device and the at least one second wireless access point.
Embodiment 29
   The method according to any of embodiments 1 to 28, wherein the second round-trip time information is representative of or comprises one or more RTT parameters respectively corresponding to respective round-trip times of signals exchanged between the mobile device and respective one or more second wireless access points.
Embodiment 30
   The method according to any of embodiments 1 to 29, wherein the at least one first apparatus, the at least one second apparatus, the one of the at least two first wireless access points and/or the at least one second wireless access point corresponds to or comprises a mobile device.
Embodiment 31
   The method according to any of embodiments 1 to 30, wherein a mobile device corresponds to or comprises a smartphone, an Internet-of-Things (IoT) device, a smart home device, a tablet computer, a notebook computer, a smart watch, and/or a smart band.
Embodiment 32
   A method performed by at least one second apparatus, the method comprising:
   - obtaining or causing obtaining first information representative of a distance between the at least one second apparatus and at least one of at least two first wireless access points;
   - obtaining or causing obtaining second information representative of a distance between the at least one second apparatus and at least one second wireless access point; and
   - providing or causing providing the second information in association with the obtained first information and/or a position estimate obtained based on the first information as first information to be accessible by an external apparatus.
Embodiment 33
   The method according to embodiment 32, further comprising:
   - obtaining or causing obtaining a position estimate of the at least one second apparatus based at least in part on the obtained first information.
Embodiment 34
   The method according to any of embodiments 32 or 33, wherein at least one second apparatus corresponds to or is comprised by a mobile device and/or wherein the external apparatus corresponds to or comprises a network server and/or a network server cloud.
Embodiment 35
   The method according to embodiment 34, wherein obtaining or causing obtaining the first information representative of the distance between a mobile device and at least one of the at least two first wireless access points corresponds to
   - obtaining or causing obtaining first information representative of a distance between the mobile device and at least one of at least two first wireless access points.
Embodiment 36
   An apparatus comprising at least one processor and at least one memory that contains program code, wherein the memory and the program code are configured to use the at least one processor to cause an apparatus to perform and/or control at least the method of any of claims 1 to 31 and/or the method according to any of claims 32 to 35.
Embodiment 37
   System comprising at least one first apparatus configured to perform the method according to any of claims 1 to 31 and/or at least one second apparatus configured to perform the method according to any of claims 32 to 35.

Any presented connection in the described embodiments is to be understood in a way that the involved components are operationally coupled. Thus, the connections can be direct or indirect with any number or combination of intervening elements, and there may be merely a functional relationship between the components.

Further, as used in this text, the term 'circuitry' refers to any of the following:
(a) hardware-only circuit implementations (such as implementations in only analog and/or digital circuitry)
(b) combinations of circuits and software (and/or firmware), such as: (1) to a combination of processor(s) or (2) to sections of processor(s)/ software (including digital signal processor(s)), software, and memory(ies) that work together to cause an apparatus, such as a mobile device, to perform various functions) and
(c) to circuits, such as a microprocessor(s) or a section of a microprocessor(s), that re-quire software or firmware for operation, even if the software or firmware is not physically present.

This definition of 'circuitry' applies to all uses of this term in this text, including in any claims. As a further example, as used in this text, the term 'circuitry' also covers an implementation of merely a processor (or multiple processors) or section of a processor and its (or their) accompanying software and/or firmware. The term 'circuitry' also covers, for example, a baseband integrated circuit or applications processor integrated circuit for a mobile phone.

Any of the processors mentioned in this text could be a processor of any suitable type. Any processor may comprise but is not limited to one or more microprocessors, one or more processor(s) with accompanying digital signal processor(s), one or more processor(s) without accompanying digital signal processor(s), one or more special-purpose computer chips, one or more field-programmable gate arrays (FPGAS), one or more controllers, one or more application-specific integrated circuits (ASICS), or one or more computer(s). The relevant structure/hardware has been programmed in such a way to carry out the described function.

Moreover, any of the actions or steps described or illustrated herein may be implemented using executable instructions in a general-purpose or special-purpose processor and stored on a computer-readable storage medium (e.g., disk, memory, or the like) to be executed by such a processor. References to 'computer-readable storage medium' should be understood to encompass specialized circuits such as FPGAs, ASICs, signal processing devices, and other devices.

The wording "A, or B, or C, or a combination thereof" or "at least one of A, B and C" may be understood to be not exhaustive and to include at least the following: (1) A, or (2) B, or (3) C, or (4) A and B, or (5) A and C, or (6) B and C, or (7) A and B and C.

It will be understood that all presented embodiments are only exemplary, and that any feature presented for a particular exemplary embodiment may be used with any aspect of the present disclosure on its own or in combination with any feature presented for the same or another particular exemplary embodiment and/or in combination with any other feature not mentioned. It will further be understood that any feature presented for an example embodiment in a particular category may also be used in a corresponding manner in an example embodiment of any other category.

## Claims

1. A method performed by at least one first apparatus, the method comprising:
- obtaining or causing obtaining first information representative of a distance between a mobile device and at least one of at least two first wireless access points;
- obtaining or causing obtaining second information representative of a distance between the mobile device and at least one second wireless access point; and
- associating or causing associating the second information with a position estimate of the mobile device determined based on the at least one distance between the mobile device and the at least one of at least two first wireless access points.

2. The method according to claim 1, wherein determining the position estimate of the mobile device is further based on position information of at least one of the at least two first wireless access points.

3. The method according to any of claims 1 or 2, wherein associating the second information with the determined position estimate of the mobile device comprises at least one of:
- storing or causing storing the second information in association with the position estimate of the mobile device;
- providing or causing providing the second information in association with the position estimate of the mobile device to be accessible by an external apparatus.

4. The method according to any of claims 1 to 3, further comprising:
- determining or causing determining a position estimate of the at least one second wireless access point based at least in part on the second information and the position estimate of the mobile device associated with the second information.

5. The method according to any of claims 1 to 4, wherein the at least two first wireless access points are comprised by a network of access points of a positioning system unaware of a position of the at least one second wireless access point before the second information representative of the distance between the mobile device and the at least one second wireless access point is obtained.

6. The method according to any of the preceding claims, wherein the first information is first round-trip time information representative of a respective round-trip time of at least one corresponding signal exchanged between the mobile device and at least one of the at least two first wireless access points and/or wherein the second information is second round-trip time information representative of a round-trip time of a corresponding signal exchanged between the mobile device and the at least one second wireless access point.

7. The method according to any of claims 4 to 6, further comprising:
- accessing or causing accessing at least one further position estimate of the mobile device and/or of a further mobile device and corresponding further second information representative of a further distance between the mobile device and the at least one second wireless access point and/or between the further mobile device and the at least one second wireless access point, wherein the at least one further position estimate and the corresponding further second information are stored in a database;
- determining or causing determining the position estimate of the at least one second wireless access point further based on the at least one further position estimate and the corresponding further second information.

8. The method according to any of the preceding claims, further comprising:
- determining or causing determining a level of confidence of the position estimate of the at least one second wireless access point based at least in part on one or more of:
• a level of confidence of the determined position estimate of the mobile device and/or the accessed position estimate of the mobile device and/or of the further mobile device;
• a number of times a position estimate of the at least one second wireless access point is determined to be within a predefined distance interval from a position estimate of the at least one second wireless access point determined before;
the method further comprising:
- determining or causing determining the at least one second wireless access point to be positioned at a position corresponding to a position estimate if the level of confidence of said position estimate is above a predefined threshold.

9. The method according to any of the preceding claims, wherein at least one of the at least two first wireless access points is a mobile device configured for performing functions of a wireless access point; and/or wherein at least one of the at least two first wireless access points is a permanently installed wireless access point.

10. The method according to any of the preceding claims 6 to 9, wherein the first round-trip time information and/or the second round-trip time information respectively corresponds to information obtained at the mobile device in response to a Fine Timing Measurement, FTM, request.

11. The method according to any of the preceding claims, wherein the at least one first apparatus corresponds to or is comprised by at least one of:
- the mobile device;
- a server;
- a server cloud.

12. The method according to any of the preceding claims, wherein obtaining the first information and/or the second information comprises:
- receiving or causing receiving the first information and/or the second information from the mobile device.

13. A method performed by at least one second apparatus, the method comprising:
- obtaining or causing obtaining first information representative of a distance between the at least one second apparatus and at least one of at least two first wireless access points;
- obtaining or causing obtaining second information representative of a distance between the at least one second apparatus and at least one second wireless access point; and
- providing or causing providing the second information in association with the obtained first information and/or a position estimate of the at least one second apparatus obtained based on the first information as first information to be accessible by an external apparatus.

14. The method according to claim 13, wherein at least one second apparatus corresponds to or is comprised by a mobile device.

15. An apparatus comprising at least one processor and at least one memory that contains program code, wherein the memory and the program code are configured to use the at least one processor to cause an apparatus to perform and/or control at least the method of any of claims 1 to 12 and/or the method according to any of claims 13 or 14.

16. System comprising at least one first apparatus configured to perform the method according to any of claims 1 to 12 and/or at least one second apparatus configured to perform the method according to any of claims 13 or 14.
